# EUROPEAN PATENT SPECIFICATION

(11) **EP 3 046 960 B1**
(45) Date of publication and mention of the grant of the patent: **18.07.2018**
(21) Application number: 14845841.7
(22) Date of filing: 05.09.2014
(51) Int. Cl.: C08K 3/32, C23C 18/14, C23C 18/20, C23C 18/40, C23C 18/16, C09D 11/322, C23C 18/18, C08K 3/26

(54) **POLYMER ARTICLE AND INK COMPOSITON AND METHODS FOR SELECTIVELY METALIZING POLYMER ARTICLE AND INSULATING SUBSTRATE**
POLYMERARTIKEL UND TINTENZUSAMMENSETZUNG SOWIE VERFAHREN ZUR SELEKTIVEN METALLISIERUNG DES POLYMERARTIKELS UND EINES ISOLIERENDEN SUBSTRATS
ARTICLE POLYMÈRE, COMPOSITION D'ENCRE ET PROCÉDÉS DE MÉTALLISATION SÉLECTIVE D'UN ARTICLE POLYMÈRE ET SUBSTRAT ISOLANT

(30) Priority: 17.09.2013 CN 201310425978
(43) Date of publication of application: 27.07.2016
(73) Proprietor: BYD Company Limited, Shenzhen, Guangdong 518118 (CN)
(72) Inventor: ZHOU, Fangxiang, Shenzhen Guangdong 518118 (CN); HUANG, Jiang, Shenzhen Guangdong 518118 (CN)
(74) Representative: Gulde & Partner
(86) International application number: PCT/CN2014/086022
(87) International publication number: WO 2015/039572

(56) References cited:
- CN-A- 102 286 209
- CN-A- 103 741 125
- JP-A- H04 180 984
- US-A- 5 489 639
- US-A- 5 702 584
- US-A1- 2003 031 803
- US-A1- 2011 281 135
- US-A1- 2012 065 313
- P. NANDHA KUMAR ET AL: "Synthesis, structural analysis and fabrication of coatings of the Cu2+ and Sr2+ co-substitutions in [beta]-Ca3(PO4)2", RSC ADVANCES: AN INTERNATIONAL JOURNAL TO FURTHER THE CHEMICAL SCIENCES, vol. 3, no. 44, 4 September 2013 (2013-09-04), page 22469, XP055361298, GB ISSN: 2046-2069, DOI: 10.1039/c3ra43171a

## Description

### FIELD

The present disclosure relates to a polymer article, an ink composition, a method for selectively metalizing a polymer article and a method for selectively metalizing an insulating substrate.

### BACKGROUND

A metal layer as a transmission access of an electromagnetic signal formed on a surface of a polymer article is widely used in the fields of automobiles, industries, computers, communications and so on. Selectively forming a metal layer on the surface of the polymer article is a key step in a process of manufacturing such polymer articles.

US2004/0241422A1 discloses that: inorganic compound powders of a spinel structure are added to a polymer matrix, such an inorganic compound contains elements such as copper, nickel, cobalt, chromium, iron and so on, then activation is performed with ultraviolet laser (with a wavelength of 248nm, 308nm, 355nm, 532nm) and infrared laser (with a wavelength of 1064nm and 10600nm). US2004/0241422A1 particularly mentions that an oxide of a spinel structure may be reduced into metal simple substances under the action of laser, and metal chemical deposition are induced using the metal simple substances as a crystal nucleus to form a metal layer. The realization of such a procedure require strict process control, high laser energy is needed to reduce the oxide of the spinel structure into metal simple substances to induce metal chemical deposition, and the requirements for equipments and processes are both high.

US5489639 discloses a laser markable thermoplastic composition, which contains copper phosphate, copper sulfate, cupric hydroxide phosphate and copper thiocyanate.

US20110281135A1 discloses a method of metallizing a plastic surface, which includes electroless plating of a copper or nickel layer on the plastic surface.

US20120065315A1 discloses a pasty ink for an engraved steel die printing process.

### SUMMARY

Embodiments of the present disclosure seek to solve at least one of the problems existing in the prior art to at least some extent.

Embodiments of a first aspect of the present disclosure provide a polymer article. The polymer article comprises a polymer matrix and a metallic compound dispersed in the polymer matrix. The metallic compound is a compound represented by formula (I),

AₓCu_{y}(PO₄)₂ (I)

wherein in formula (I), A is at least one element selected from a group consisting of Ca, Mg, Ba, Sr, and a combination thereof, x/y=0.1 to 20, x+y=3.

Embodiments of a second aspect of the present disclosure provide an ink composition. The ink composition contains at least one metallic compound and at least one binder. The metallic compound is a compound represented by formula (I),

AₓCu_{y}(PO₄)₂ (I)

wherein in formula (I), A is at least one element selected from a group consisting of Ca, Mg, Ba, Sr, and a combination thereof, x/y=0.1 to 20, x+y=3.

Embodiments of a third aspect of the present disclosure provide a method for selectively metalizing a polymer article. The method comprises steps of: irradiating a surface of the polymer article to be metalized with energy beam; and performing chemical plating on the irradiated polymer article. The polymer article comprises a polymer matrix and a metallic compound dispersed in the polymer matrix, wherein the metallic compound is a compound represented by formula (I),

AₓCu_{y}(PO₄)₂ (I)

wherein in formula (I), A is at least one element selected from a group consisting of Ca, Mg, Ba, Sr, and a combination thereof, x/y=0.1 to 20, x+y=3.

Embodiments of a fourth aspect of the present disclosure provide a method for selectively metalizing an insulating substrate. The method comprises steps of:
mixing at least one metallic compound and at least one binder to obtain an ink composition, applying the ink composition on a surface of the insulating substrate to be metalized to form an ink layer, wherein the metallic compound is a compound represented by formula (I),

   AₓCu_{y}(PO₄)₂ (I)

   wherein in formula (I), A is at least one element selected from a group consisting of Ca, Mg, Ba, Sr, and a combination thereof, x/y=0.1 to 20, x+y=3; and
performing chemical plating on the insulating substrate having the ink layer to plate at least one metal layer on the ink layer.

With the polymer article and the ink composition according to embodiments of the present disclosure, the metallic compound can be directly used as a chemical plating accelerator, without reducing the metallic compound into a metal simple substance. Therefore, with the polymer article containing the metallic compound, it is only necessary to selectively roughen the surface of the polymer article to selectively metalize the surface of the polymer article by chemical plating; or the ink composition may be selectively coated on the surface of the substrate, and then the surface of the polymer article can be selectively metalized by chemical plating. Moreover, when the surface of the polymer article is selectively irradiated using laser to realize surface roughening, without requiring excessive energy to reduce the metallic compound into a metal simple substance, it is only necessary to gasify the polymer to expose the metallic compound to perform chemical plating, so as to selectively metalize the surface of the polymer article, so that the process is simple and the energy requirement is low.

Furthermore, the color of the metallic compound used in the present disclosure is light, and thus the polymer article according to embodiments of the present disclosure also can show light color. Additionally, the metallic compound can be obtained using a conventional method.

### DETAILED DESCRIPTION

According to a first aspect of the present disclosure, a polymer article is provided. The polymer article comprises a polymer matrix and a metallic compound dispersed in the polymer matrix, in which the metallic compound is a compound represented by formula (I),

AₓCu_{y}(PO₄)₂ (I).

in which in formula (I), A is at least one element selected from Group IIA of the periodic table of elements. A is selected from a group consisting of Ca, Mg, Ba, Sr, or a combination thereof.

In formula (I), x/y=0.1 to 20, x+y=3.

Specific examples of the metallic compound may include, but are not limited to, Cu_{2.7}Mg_{0.3}(PO₄)₂, Cu_{1.5}Mg_{1.5}(PO₄)₂, Cu_{1.5}Ba_{0.75}Sr_{0.75}(PO₄)₂, Cu_{0.15}Mg_{2.85}(PO₄)₂, Cu_{1.5}Ca_{1.5}(PO₄)₂, Cu_{0.15}Ca_{2.85}(PO₄)₂, Cu₂Ba(PO₄)₂, CuSr₂(PO₄)₂, Cu_{0.4}Sr_{2.6}(PO₄)₂, and a combination thereof.

The color of the metallic compound is light green or light sky blue, and thus the polymer article according to the present disclosure also can show light color.

The metallic compound may be obtained by sintering a mixture containing a Cu source, a Group IIA metal source and a phosphate.

The Cu source may be a CuO and/or a substance capable of forming CuO in a sintering condition. The substance capable of forming CuO in the sintering condition may be various copper salts, such as copper salts of inorganic acids and/or copper salts of organic acids. Specific examples of the substance capable of forming CuO in the sintering condition may include, but are not limited to, cupric oxalate and/or copper carbonate.

The Group IIA metal source may be a Group IIA metal oxide and/or a compound capable of forming a Group IIA metal oxide in a sintering condition. The compound capable of forming the Group IIA metal oxide in the sintering condition may be Group IIA metal salts of organic acids and/or Group IIA metal salts of inorganic acids, for example, Group IIA metal salts of carbonic acid and/or Group IIA metal salts of oxalic acid. Specific examples of the Group IIA metal source may include, but are not limited to, magnesium oxide, magnesium carbonate, magnesium oxalate, calcium oxide, calcium carbonate, calcium oxalate, strontium oxide, strontium carbonate, barium oxide, barium carbonate, barium oxalate and a combination thereof.

The phosphate may be various commonly used metal salts of phosphoric acid and/or ammonium salts of phosphoric acid. Specific examples of the phosphate may include, but are not limited to, diammonium hydrogen phosphate and/or ammonium dihydrogen phosphate.

The relative proportion among the Cu source, the Group IIA metal source and the phosphate is such that the content of various elements in the finally obtained metallic compound satisfies the above-described requirement.

The sintering may be performed using a single-stage sintering process or a two-stage sintering process. Specifically, the single-stage sintering process comprises sintering a mixture containing the Cu source, the Group IIA metal source and the phosphate at a temperature of 900°C to 1000°C for 10h to 20h, and grinding the obtained sinter. The two-stage sintering process comprises: sintering a mixture of the Cu source, the Group IIA metal source and the phosphate at a temperature of 600°C to 900°C for 2h to 10h, then grinding the obtained solid substance, and then sintering the grinded substance at a temperature of 900°C to 1000°C for 10h to 20h. For the step of sintering at a temperature of 900°C to 1000°C for 10h to 20h, when the molar ratio of the Group IIA metal to Cu is less than 1, preferably, the sintering is performed at a temperature of 900°C to 950°C for 10h to 20h, whether the single-stage sintering process or the two-stage sintering process.

The mixture containing the Cu source, the Group IIA metal source and the phosphate may be obtained by grinding the Cu source, the Group IIA metal source and the phosphate.

In the present disclosure, the grinding may be dry grinding, a wet grinding, or a semi-dry grinding, preferably wet grinding or semi-dry grinding, more preferably wet grinding. A dispersing agent for the wet grinding may be various commonly used dispersing agents which are suitable for metal oxides. Specifically, the dispersing agent may be water and/or anhydrous ethanol. There are no special limits on the amount of the dispersing agent.

According to the specific function of the metallic compound in the polymer article, the content of the metallic compound in the polymer article may be selected appropriately. Specifically, when the metallic compound in polymer article is used as a chemical plating accelerator selectively metalizing a surface of the polymer article, based on the total weight of the polymer article, the content of the metallic compound may be 1 wt% to 40 wt%, preferably 10 wt% to 40 wt%.

The polymer article may be prepared using a commonly used polymer molding method. In an embodiment, the polymer article may be obtained by mixing a polymer matrix component with a metallic compound uniformly, and molding the obtained mixture.

The polymer matrix component means a component for forming the polymer matrix, comprising a polymer and an optional aid.

The polymer may be selected appropriately according to the specific application occasions of the polymer article. Generally, the polymer article may be formed from a thermoplastic polymer, and may also be formed by a thermoset polymer. The polymer may be a plastic, may also be a rubber, and may also be a fiber. Specific examples of the polymer may include, but are not limited to, polyolefin, such as polystyrene, polypropylene, poly(methyl methacrylate) and poly(acrylonitrile-butadiene-styrene); polycarbonate; polyesters, such as poly(1,4-cyclohexylenedimethylene terephthalate), poly(diallyl isophthalate), poly(dially terephthalate), poly(butylene naphthalate), poly(ethylene terephthalate) and poly(butylene terephthalate); polyamides, such as poly(hexamethylene adipamide), poly(hexamethylene azelamide), poly(hexamethylene succinamide), poly(hexamethylene lauramide), poly(hexamethylene sebacamide), poly(decamethylene sebacamide), poly(undecanoic amide), poly(lauramide), poly(octanamide), poly(9-aminononanoic acid), polycaprolactam, poly(phenylene terephthalamide), poly(hexamethylene isophthalamide), poly(hexamethylene terephthalamide) and poly(nonamethylene terephthalamide); poly(aromatic ether); polyether imide; polycarbonate/(acrylonitrile-butadiene-styrene)alloy; polyphenylene oxide; polyphenylene sulphide; polyimide; polysulfone; poly(ether-ether-ketone); polybenzimidazole; phenol formaldehyde resin; urea formaldehyde resin; melamine-formaldehyde resin; epoxy resin; alkyd resin; polyurethane; and a combination thereof.

The aid may be a substance which can improve the property of the polymer article or give the polymer article a new property, for example, a filler, an antioxidant and a light stabilizer. The content of the aid may be selected appropriately according to the type and the specific use requirements of the aid, without special limits. Generally, the content of the filler may be 1 weight part to 40 weight parts, the content of the antioxidant may be 0.01 weight parts to 1 weight part, the content of the light stabilizer may be 0.01 weight parts to 1 weight part, with respect to 100 weight parts of the polymer.

The filler may be a filler which is physically or chemically non-reactive under the action of laser, for example, talcum powder and calcium carbonate. Glass fiber is insensitive to laser, but adding glass fiber can greatly enlarge the recessed depth of the plastic matrix after laser activation, which benefits for copper deposition in the chemical copper plating. The filler may also be an inorganic filler which is reactive under the action of laser, for example, tin oxide, particularly, nano tin oxide, which can increase the energy usage ratio of infrared laser when stripping the plastic surface; a functional filler such as carbon black, which also can increase absorption of the infrared laser by the plastic and increase the stripping degree of the plastic. The filler may also be selected from a group consisting of glass microbeads, calcium sulfate, barium sulfate, titanium dioxide, pearl powder, wollastonite, siliceous earth, kaolin, coal powder, pot clay, mica, oil shale ash, aluminium silicate, aluminium oxide, carbon fiber, silicon dioxide, zinc oxide and a combination thereof.

The antioxidant can improve the antioxygenic property of the polymer article, thus improving the useful life of the article. The antioxidant may be various commonly used antioxidants in the polymer field, for example, may contain a primary antioxidant and a secondary antioxidant. The ratio between the primary antioxidant and the secondary antioxidant may be selected appropriately according to the type of the antioxidant. Generally, the weight ratio of the primary antioxidant to the secondary antioxidant may be 1:1 to 1:4. The primary antioxidant may be a hindered phenol type antioxidant. Specific examples of the primary antioxidant may include, but are not limited to, antioxidant 1098 and antioxidant 1010, in which the main component of the antioxidant 1098 is 3,3'-bis(3,5-di-tert-butyl-4-hydroxyphenyl)-N,N'-hexamethylenedipropionamide, and the main component of the antioxidant 1010 is pentaerythritol tetrakis(3-(3,5-di-tert-butyl-4-hydroxyphenyl)propionate). The secondary antioxidant may be a phosphite type antioxidant. Specific examples of the secondary antioxidant may include, but are not limited to, antioxidant 168, in which the main component of the antioxidant 168 is tris(2,4-di-tert-butyl-pheny)phosphite.

The light stabilizer may be various well known light stabilizers, for example, a hindered amine type light stabilizer. Specific examples of the light stabilizer may include, but are not limited to, bis(2,2,6,6-tetramethyl-4-piperidyl)sebacate.

The aid also may comprise various substances, such as a lubricant, which are able to improve the processability of the polymer matrix. The lubricant may be various substances, which can improve the flowability of the polymer melt. For example, the lubricant may be selected from a group consisting of ethylene/vinyl acetate copolymer (EVA wax), polyethylene wax (PE wax), stearate and a combination thereof. The content of the lubricant may be 0.01 weight parts to 1 weight part, with respect to 100 weight parts of the polymer.

The particle size of the metallic compound may be selected according to the molding method, such that a compact polymer article may be formed. Generally, the volume average particle size of the metallic compound may be 0.1 µm to 5 µm, preferably 0.4µm to 2 µm.

The molding method may be various commonly used molding methods in the polymer molding field, for example, injection molding, or extrusion molding.

According to the second aspect of the present disclosure, an ink composition is provided. The ink composition contains at least one metallic compound and at least one binder, in which the metallic compound is a compound represented by formula (I),

AₓCu_{y}(PO₄)₂ (I)

In formula (I), A is at least one element selected from a group consisting of Ca, Mg, Ba, Sr, and a combination thereof, x/y=0.1 to 20, x+y=3.

The metallic compound and the method for preparing the same have been described above in detail, so a detailed description thereof will be omitted here for the clarity purpose.

The particle size of the metallic compound is such that it is possible to ensure that the finally formed ink composition can form a uniform ink layer. Generally, the volume average particle size of the metallic compound may be 20 nm to 500 nm.

Since the ink composition further contains at least one binder, when the ink composition is applied on the surface of the insulating substrate, the binder may perform the function of dispersing the metallic compound uniformly on the surface of the insulating substrate, and then forming a film having certain strength and having certain adhesion to the insulating substrate on the surface of the insulating substrate.

There are no particular limits on the type of the binder, as long as the selected binder can perform the above-mentioned function. Preferably, the binder is an organic adhesive. More preferably, the binder is selected from a group consisting of cellulose acetate, a polyacrylate resin, ethylene vinyl acetate copolymer, polyvinyl alcohol, polyvinyl acetal, polyvinyl acetate, polyvinylpyrrolidone, polyphosphonic acid and a combination thereof.

In the ink composition, the binder may be, for example, CAB series cellulose acetate butyrates (for example, cellulose acetate butyrates under the trade name of CAB381-0.5, CAB381-20, CAB551-0.2 and CAB381-2), commercially available from Eastman Chemical Company of US; and Mowital series polyvinyl butyrals (for example, polyvinyl butyrals under the trade name of Mowital B 60T, Mowital B 75H and Mowital B 60H), commercially available from Kuraray company of Japan.

In the ink composition, the relative proportion between the binder and the metallic compound is such that the metallic compound is uniformly dispersed on the surface of the insulating substrate, an ink layer having certain strength and having certain adhesion to the insulating substrate is formed, and the metal layer can be plated on the ink layer. Generally, in the ink composition, with respect to 100 weight parts of the metallic compound, the amount of the binder may be 1 weight part to 60 weight parts, preferably 15 weight parts to 30 weight parts.

In order to further improve the dispersible uniformity of the metallic compound in the binder and form a more uniform film on the surface of the insulating substrate, the ink composition preferably contains a solvent. There are no particular limits on the type of the solvent. Preferably, the solvent is selected from a group consisting of water, C₁-C₁₂ alcohols, C₃-C₁₂ ketones, C₆-C₁₂ aromatic hydrocarbons, C₁-C₁₂ haloalkanes and C₂-C₁₂ haloolefins and a combination thereof. Specifically, the solvent may be selected from a group consisting of methanol, ethanol, n-propanol, isopropanol, n-butanol, tert-butanol, n-pentanol, n-hexanol, n-heptanol, n-octanol, acetone, 2-pentanone, 2-butanone, 3-methyl-2-pentanone, 2,3-butanedione, 2,3-pentanedione, 2,5-hexanedione, 1,3-cyclohexanedione, toluene, xylene, trichloroethene and a combination thereof.

There are no special limits on the amount of the solvent. In the premise of ensuring that the metallic compound can be uniformly dispersed in the binder and a film is uniformly formed on the surface of the insulating substrate, in order to reduce the amount of the solvent, with respect to 100 weight parts of the metallic compound, the amount of the solvent may be 20 weight parts to 200 weight parts, preferably 20 weight parts to 100 weight parts.

According to the specific application occasions of the ink composition, the ink composition may further contain various commonly used aids in the ink field, to give the ink composition specific property or function. Preferably, the aid is selected from a group consisting of a dispersing agent, a defoamer, a leveling agent, a viscosity regulator and a combination thereof. There are no special limits on the amount of the aid. Preferably, with respect to 100 weight parts of the metallic compound, the total amount of the aid may be 0.1 weight parts to 20 weight parts, preferably 0.5 weight parts to 10 weight parts.

In the ink composition, the dispersing agent is used for shorting the time of dispersing the metallic compound in the binder and the optional solvent, and improving the dispersion stability of the metallic compound in the binder and the optional solvent. The dispersing agent may be various commonly used substances in the art, which can realize the above-mentioned function. For example, the dispersing agent may be an organic dispersing agent commonly used in the art, for example, an aliphatic amine dispersing agent, an alcohol amine dispersing agent, a cyclic unsaturated amine dispersing agent, a fatty acid dispersing agent, an aliphatic amide dispersing agent, an ester dispersing agent, a paraffin dispersing agent, a phosphate dispersing agent, a polymer dispersing agent (for example, a polyacrylate dispersing agent and a polyester dispersing agent) and an organic phosphine dispersing agent.

In the ink composition, the dispersing agent may be various commercially available dispersing agents commonly used in the art. Specifically, the dispersing agent may be selected from a group consisting of: dispersing agents under the trade name of ANTI-TERRA-U, ANTI-TERRA-U 80, ANTI-TERRA-U 100, DISPERBYK-101, DISPERBYK-130, BYK-220 S, LACTIMON, LACTIMON-WS, BYK-W 966, DISPERBYK, BYK-154, BYK-9076, DISPERBYK-108, DISPERBYK-109, DISPERBYK-110, DISPERBYK-102, DISPERBYK-111, DISPERBYK-180, DISPERBYK-106, DISPERBYK-187, DISPERBYK-181, DISPERBYK-140, DISPERBYK-142, DISPERBYK-145, DISPERBYK-115, DISPERBYK-160, DISPERBYK-161, DISPERBYK-162, DISPERBYK-163, DISPERBYK-164, DISPERBYK-165, DISPERBYK-166, DISPERBYK-167, DISPERBYK-182, DISPERBYK-183, DISPERBYK-184, DISPERBYK-185, DISPERBYK-168, DISPERBYK-169, DISPERBYK-170, DISPERBYK-171, DISPERBYK-174, DISPERBYK-190, DISPERBYK-2150, BYK-9077, DISPERBYK-112, DISPERBYK-116, DISPERBYK-191, DISPERBYK-192, DISPERBYK-2000, DISPERBYK-2001, DISPERBYK-2010, DISPERBYK-2020, DISPERBYK-2025, DISPERBYK-2050 and DISPERBYK-2070, commercially available from BYK company of Germany; a dispersing agent under the trade name of PHOSPHOLAN PS-236 commercially available from Akzo Nobel company of Netherland; a dispersing agent under the trade name of PS-21A commercially available from Witco chemical company of US; the Hypermer KD series dispersing agent and the Zephrym PD series dispersing agent commercially available from Croda company of England; and a combination thereof.

There are no special limits on the amount of the dispersing agent. Generally, with respect to 100 weight parts of the metallic compound, the amount of the dispersing agent may be 0.1 weight parts to 4 weight parts.

In the ink composition, the defoamer may be various commonly used substances in the art, which can suppress the formation of foams, destroy the formed foams or discharge the formed foams from the system. For example, the defoamer may be an organic polysiloxane defoamer, a polyether defoamer and a higher alcohol defoamer. Preferably, the defoamer is an organic polysiloxane defoamer.

In the ink composition, the defoamer may be various commercially available defoamer commonly used in the art. Specifically, the defoamer may be selected from a group consisting of defoamers under the trade name of BYK-051, BYK-052, BYK-053, BYK-055, BYK-057, BYK-020, BYK-065, BYK-066N, BYK-067A, BYK-070, BYK-080A, BYK-088, BYK-141, BYK-019, BYK-021, BYK-022, BYK-023, BYK-024, BYK-025, BYK-028, BYK-011, BYK-031, BYK-032, BYK-033, BYK-034, BYK-035, BYK-036, BYK-037, BYK-038, BYK-045, BYK-A530, BYK-A555, BYK-071, BYK-060, BYK-018, BYK-044, BYK-094, and a combination thereof, commercially available from BYK company of Germany.

There are no special limits on the amount of the defoamer. Preferably, with respect to 100 weight parts of the metallic compound, the amount of the defoamer is 0.1 weight parts to 3 weight parts.

In the ink composition, the leveling agent is used for enabling the ink composition to form a more flat, smooth and uniform film in the drying process. There are no special limits on the type of the leveling agent, and the leveling agent may be a commonly used substance that can realize the above-mentioned function in the art. For example, the leveling agent may be selected from a group consisting of a polyacrylate leveling agent, a polydimethylsiloxane leveling agent, a polymethyl phenyl siloxane leveling agent, a fluorine-containing surfactant and a combination thereof.

In the ink composition, the leveling agent may be various commercially available leveling agents commonly used in the art. For example, the leveling agent may be selected from a group consisting of leveling agents under the trade name of BYK-333, BYK-306, BYK-358N, BYK-310, BYK-354, BYK-356 and a combination thereof, commercially available from BYK company of Germany.

There are no special limits on the amount of the leveling agent. Preferably, with respect to 100 weight parts of the metallic compound, the amount of the leveling agent is 0.3 weight parts to 4 weight parts.

In the ink composition, the viscosity regulator is used for adjusting the viscosity of the ink composition. There are no special limits on the type of the viscosity regulator. For example, the viscosity regulator may be selected from a group consisting of fumed silica, polyamide wax, organic bentonite, hydrogenated castor oil, metallic soap, hydroxyalkyl celluloses and derivatives thereof, polyvinyl alcohol and polyacrylate and a combination thereof.

There are no special limits on the amount of the viscosity regulator. Preferably, with respect to 100 weight parts of the metallic compound, the amount of the viscosity regulator is 0.3 weight parts to 3 weight parts.

In one preferred embodiment, the ink composition contains the metallic compound, the binder, a solvent, a dispersing agent, a defoamer, a leveling agent and a viscosity regulator. With respect to 100 weight parts of the metallic compound, the amount of the binder is 1 weight part to 30 weight parts, the amount of the solvent is 20 weight parts to 200 weight parts, the amount of the dispersing agent is 0.4 weight parts to 4 weight parts, the amount of the defoamer is 0.1 weight parts to 3 weight parts, the amount of the leveling agent is 0.3 weight parts to 4 weight parts, and the amount of the viscosity regulator is 0.3 weight parts to 3 weight parts.

There are no special limits on the method for preparing the ink composition, as long as the metallic compound and the binder as well as the optional solvent and aid may be mixed uniformly. For example, the ink composition may be obtained by mixing the metallic compound with the binder as well as the optional solvent and aid uniformly in a mixer such as a planet-type ball mill. In the mixer, the method and the conditions of mixing individual components uniformly are well known in the art, so a detailed description thereof will be omitted here for the clarity purpose.

The ink composition according to embodiments of the present disclosure can be applied on the surface of the insulating (i.e. nonconductive) substrate, and chemical plating may be performed on the surface of the insulating substrate, thus selectively metalizing the surface of the insulating substrate and consequently forming a signal transmission pathway on the surface of the nonconductive substrate.

According to a third aspect of the present disclosure, a method for selectively metalizing a polymer article is provided. The method comprises steps of:
irradiating a surface of the polymer article to be metalized with energy beam; and
performing chemical plating on the irradiated polymer article,
in which the polymer article is the abovementioned polymer article.

The polymer article and the method for preparing the same have been described above in detail, so a detailed description thereof will be omitted here for the clarity purpose.

The energy beam may be various energy beams, which can gasify the polymer, for example, laser, electron beam or ion beam, preferably laser.

The irradiating condition of the energy beam is such that the polymer on the surface of the polymer article is gasified to expose the metallic compound, and the irradiating condition of the energy beam may be selected according to the type of the polymer and the type of the energy beam. With the method according to embodiments of the present disclosure, when the surface of the polymer article is selectively irradiated with energy beam, without needing excessive energy to reduce the metallic compound into metal simple substances, it is only necessary to gasify the polymer to expose the metallic compound so as to perform chemical plating directly to selectively metalize the surface of the polymer article, so that the process is simple and the energy requirement is low.

Generally, when laser is used as the energy beam, the laser has a wavelength of 157nm to 10.6 µm, a scanning speed of 500 mm/s to 8000 mm/s, a step of 3µm to 9 µm, a delay time of 30 µs to 100 µs, a frequency of 30kHz to 40kHz, a power of 3kW to 4kW, and a filling gap of 10µm to 50 µm. Generally, by irradiating the surface of the polymer article with the above laser, the thickness of the etched polymer is a few microns to tens of microns, thus exposing the catalyst component particles in the polymer article, and forming a crude surface structure having uneven pores on at least part of the surface of the polymer article. In the subsequent chemical plating, the metal particles will be embedded into the pores in the crude surface, thus forming very strong binding force with the plastic samples.

The method of performing chemical plating on the polymer article on which catalyst component particles are exposed is well known to a person skilled in the art. For example, when chemical copper plating is performed, the method may comprise contacting the etched polymer article with a copper plating solution. The copper plating solution contains a copper salt and a reducing agent. The pH value of the copper plating solution is 12 to 13. The reducing agent can reduce copper ions in the copper salt into copper simple substances. The reducing agent, for example, may be selected from a group consisting of glyoxylic acid, hydrazine, sodium hypophosphite, and a combination thereof.

After chemical plating is performed, electroplating may be performed or the chemical plating may be performed once or many times, in order to further increase the thickness of the plating layer or form other metal plating layers on the chemical plating layer. For example, after chemical copper plating is completed, one nickel layer may be formed by chemical plating to prevent the surface of the copper plating layer from being oxidized.

According to a fourth aspect of the present disclosure, a method for selectively metalizing an insulating substrate is provided. The method comprises steps of:
mixing at least one metallic compound and at least one binder to obtain an ink composition,
applying the ink composition on a surface of the insulating substrate to be metalized to form an ink layer, in which the metallic compound is a compound represented by formula (I),

   AₓCu_{y}(PO₄)₂ (I)

   in which in formula (I), A is at least one element selected from a group consisting of Ca, Mg, Ba, Sr, and a combination thereof, x/y=0.1 to 20, x+y=3; and
performing chemical plating on the insulating substrate having the ink layer to plate at least one metal layer on the ink layer.

The ink composition and the method for preparing the same have been described above in detail, so a detailed description thereof will be omitted here for the clarity purpose.

Various commonly used methods may be used for applying the ink composition on the surface of the insulating substrate. For example, the ink composition may be applied on the surface of the insulating substrate to be metalized by a method selected from a group consisting of screen printing, spray coating, laser printing, ink jet printing, pad printing, gravure printing, letterpress printing, and lithographic printing. Particular operating steps and conditions of screen printing, spray coating, laser printing, ink jet printing, pad printing, gravure printing, letterpress printing, and lithographic printing are well known in the art, so a detailed description thereof will be omitted here for the clarity purpose. In some embodiments, the ink composition is particularly applied on the surface of the insulating substrate to be metalized by ink jet printing or laser printing.

After applying the ink composition on the surface of the insulating substrate, the method according to embodiments of the present disclosure may further comprise the step of drying the substrate having the ink composition. There are no special limits on the drying method, and the drying method may be selected appropriately according to the type of the binder as well as the optional solvent in the ink composition. For example, the drying may be performed at a temperature of 40°C to 150°C for 0.5 h to 5 h. The drying may be performed under the normal pressure, and may also be performed under a reduced pressure.

The thickness of the ink layer may be selected appropriately according to the constituent of the ink composition, such that chemical plating may be performed on the surface of the insulating substrate to selectively metalize a surface of the insulating substrate. Preferably, the thickness of the ink layer is 8µm to 50 µm. More preferably, the thickness of the ink layer is 12µm to 40 µm. Further preferably, the thickness of the ink layer is 12µm to 25 µm.

The method of the chemical plating is also well known to a person skilled in the art. For example, when chemical copper plating is performed, the method may comprise contacting the insulating substrate having the ink layer with a copper plating solution. The copper plating solution contains a copper salt and a reducing agent. The pH value of the copper plating solution is 12 to 13. The reducing agent can reduce copper ions in the copper salt into copper simple substances. For example, the reducing agent may be selected from a group consisting of glyoxylic acid, hydrazine, sodium hypophosphite and a combination thereof.

After chemical plating is performed, electroplating may be performed or the chemical plating may be performed once or many times, in order to further increase the thickness of the plating layer or form other metal plating layers on the chemical plating layer. For example, after chemical copper plating is completed, one nickel layer may be formed by chemical plating to prevent the surface of the copper plating layer from being oxidized.

In order to further improve the adhesion of the metal layer formed by chemical plating as well as the plating speed, before performing chemical plating on the insulating substrate having the ink layer, the method according to the fourth aspect of the present disclosure preferably further comprises irradiating the surface of the ink layer using energy beam, to gasify the surface of the ink layer.

The energy beam may be a laser, electron beam or ion beam, preferably laser. The irradiating condition of the energy beam is such that the surface of the ink layer may be gasified. Specifically, when the energy beam is laser, the laser has a wavelength of 157nm to 10.6 µm, a scanning speed of 500 mm/s to 8000 mm/s, a step of 3µm to 9 µm, a delay time of 30 µs to 100 µs, a frequency of 30kHz to 40kHz, a power of 3kW to 4kW, and a filling gap of 10µm to 50 µm.

The method according to embodiments of the present disclosure can perform selectively metalizing on various insulating substrates. The insulating substrate, for example, may be a plastic substrate, a rubber substrate, a fiber substrate, a coating formed by a coating material, a ceramic substrate, a glass substrate, a wooden substrate, a cement substrate or paper. Preferably, the insulating substrate is a plastic substrate or a ceramic substrate. When the insulating substrate is a flexible plastic substrate (for example, polyethylene glycol terephthalate, polyimide, polycarbonate, polyether ketone, poly(ether ether ketone) or liquid crystal polymer), the article obtained by applying the ink composition on the surface of the substrate and selectively metalizing the substrate is particularly suitable for preparing a flexible circuit board.

The present disclosure will be described in detail below.

In the following Examples and Comparative Examples, the composition of the metallic compound was measured by an inductively coupled plasma-atomic emission spectrometry (ICP-AES).

In the following Examples and Comparative Examples, the volume average particle size was measured by a Laser Particle Sizer commercially available from Chengdu Jingxin Powder Analyse Instrument Co., Ltd., China.

In the following Examples and Comparative Examples, the adhesion of the metal layer formed on the surface of the substrate was measured by a cross-cut process.

Specifically, a surface of the sample to be measured was cut using a cross-cut knife to form 100 grids (1 mm×1 mm). A gap between adjacent grids was formed to reach the bottom of the metal layer. Debris in the test region was cleaned using a brush, and then an adhesive tape (3M600 gummed paper) was sticked to grids in the test region. One end of the sticked adhesive paper was rapidly torn off in a vertical direction. Two identical tests were performed on the same grid region. The result of the adhesion was determined according to the following standard.

ISO Grade 0: the cut edge is smooth, and neither metal layers at the cut edge nor metal layers at the cut intersection of the grid peel off.

ISO Grade 1: the metal layers at the cut intersection partially peel off, but no more than 5% (area percent) of the metal layers peel off.

ISO Grade 2: the metal layers both at the cut edge and the cut intersection partially peel off, and 5% to 15% (area percent) of the metal layers peel off.

ISO Grade 3: the metal layers at both the cut edge and the cut intersection partially peel off, and 15% to 35% (area percent) of the metal layers peel off.

ISO Grade 4: the metal layers at both the cut edge and the cut intersection partially peel off, and 35% to 65% (area percent) of the metal layers peel off.

ISO Grade 5: the metal layers at both the cut edge and the cut intersection partially peel off, and more than 65% (area percent) of the metal layers peel off.

Examples 1 to 4 are used for describing the polymer article and the method for selectively metalizing the polymer article.

### Example 1

### (1) Preparation of metallic compound

CuO, MgCO₃ and NH₄H₂PO₄ were mixed uniformly, in which the molar ratio between the CuO, MgCO₃ and NH₄H₂PO₄ was 2.7:0.3:2. Then, wet grinding was performed for the obtained mixture on a grinding mill, in which the dispersing agent was anhydrous ethanol. With respect to 100 weight parts of the mixture, the amount of anhydrous ethanol was 150 weight parts. The grinding was performed at a rotating speed of 500 rpm for 5 hours.

The obtained powder was put in an oven, and the powder was dried in an air atmosphere at a temperature of 80°C for 12 hours.

The dried powder was put in a muffle furnace and sintered in an air atmosphere at a temperature of 900°C for 2 hours. Then, dry grinding was performed for the sinter. Then, the obtained powder was put in the muffle furnace and sintered in an air atmosphere at a temperature of 950°C for 10 hours again, and then dry grinding was performed for the sinter, thus obtaining a metallic compound having a volume average particle size of 2 µm. The detection result shows that the formula of the metallic compound is Cu_{2.7}Mg_{0.3}(PO₄)₂. The metallic compound shows light sky blue with a hexadecimal color code (i.e. HEX format) of #87CEFA, and a RGB color model (i.e. RGB format) of (135, 206, 250).

### (2) Formation of polymer sheet

Polycarbonate, antioxidant 1098, PE wax as a lubricant and the metallic compound prepared in step (1) were mixed. With respect to 100 weight parts of the polycarbonate, the amount of the metallic compound was 10 weight parts, the amount of the antioxidant was 0.05 weight parts, and the amount of the lubricant was 0.04 weight parts. After the obtained mixture was pelleted, the pellets were fed into an injection molding machine to perform injection molding, thus obtaining a polymer sheet with a thickness of 2 mm.

### (3) Irradiation and chemical plating

The polymer sheet obtained in step (2) was put on the sample stage of the laser device, then the laser was focused, the movement of the laser beam or the sample stage was controlled by a computer program. The laser device was Hans YLP-20 type laser device. The laser parameters were as follows: the wavelength was 1064nm, the scanning speed was 1000mm/s, the step was 6µm, the delay time was 50µs, the frequency was 30kHz, the power was 4kW, and the filling gap was 20µm. After laser etching, a decontamination processing on the sample was performed, and then the sample was put in a plating solution to perform chemical plating, thus obtaining a plating layer with a thickness of 12 µm. The plating solution comprised 5g/L copper sulfate pentahydrate, 25g/L potassium sodium tartrate, 7g/L sodium hydroxide, 10g/L formaldehyde, and 0.1g/L stabilizer.

The test result shows that the plating speed is 8 µm/h and the adhesion of the plating layer is ISO Grade 1.

### Example 2

### (1) Preparation of metallic compound

CuO, CaO and NH₄H₂PO₄ were mixed uniformly, in which the molar ratio between the CuO, CaO and NH₄H₂PO₄ was 1.5:1.5:2. Then, wet grinding was performed for the obtained mixture on a grinding mill, in which the dispersing agent was anhydrous ethanol. With respect to 100 weight parts of the mixture, the amount of anhydrous ethanol was 150 weight parts. The grinding was performed at a rotating speed of 500 rpm for 5 hours.

The obtained powder was put in an oven, and the powder was dried in an air atmosphere at a temperature of 80°C for 12 hours.

The dried powder was put in the muffle furnace and sintered in an air atmosphere at a temperature of 1000°C for 20 hours. Then, dry grinding was performed for the sinter, thus obtaining a metallic compound having a volume average particle size of 1.5 µm. The detection result shows that the chemical formula of the metallic compound is Cu_{1.5}Ca_{1.5}(PO₄)₂. The metallic compound shows light green with a hexadecimal color code (i.e. HEX format) of #90EE90 and a RGB color model (i.e. RGB format) of 144, 238, 144. (2) Formation of polymer sheet

Polycarbonate, antioxidant 1098, PE wax as a lubricant and the metallic compound prepared in step (1) were mixed. With respect to 100 weight parts of the polycarbonate, the amount of the metallic compound was 20 weight parts, the amount of the antioxidant was 0.05 weight parts, and the amount of the lubricant was 0.04 weight parts. After the obtained mixture was pelleted, the pellets were fed into an injection molding machine to perform injection molding, thus obtaining a polymer sheet with a thickness of 4 mm.

### (3) Irradiation and chemical plating

The polymer sheet obtained in step (2) was put on the sample stage of the laser device, then the laser was focused, the movement of the laser beam or the sample stage was controlled by a computer program. The laser device was Hans YLP-20 type laser device. The laser parameters were as follows: the wavelength was 1064nm, the scanning speed was 1000mm/s, the step was 6µm, the delay time was 50µs, the frequency was 30kHz, the power was 4kW, and the filling gap was 20µm. After laser etching, a decontamination processing was performed for the plastic sample, and then the plastic sample was put in a plating solution to perform chemical plating, thus obtaining a plating layer with a thickness of 10 µm. The plating solution comprised 5g/L copper sulfate pentahydrate, 25g/L potassium sodium tartrate, 7g/L sodium hydroxide, 10g/L formaldehyde, and 0.1g/L stabilizer.

The test result shows that the plating speed is 6 µm/h and the adhesion of the plating layer is ISO Grade 1.

### Example 3

### (1) Preparation of metallic compound

CuO, BaCO₃, SrCO₃ and NH₄H₂PO₄ were mixed uniformly, in which the molar ratio between the CuO, BaCO₃, SrCO₃ and NH₄H₂PO₄ was 1.5:0.75:0.75:2. Then, wet grinding was performed for the obtained mixture on a grinding mill, in which the dispersing agent was anhydrous ethanol. With respect to 100 weight parts of the mixture, the amount of anhydrous ethanol was 150 weight parts. The grinding was performed at a rotating speed of 500 rpm for 5 hours.

The obtained powder was put in an oven, and the powder was dried in an air atmosphere at a temperature of 80°C for 12 hours.

The dried powder was put in the muffle furnace and sintered in an air atmosphere at a temperature of 600°C for 10 hours. Then, dry grinding was performed for the sinter, thus obtaining a metallic compound. Then, the obtained powder was put in the muffle furnace and sintered in an air atmosphere at a temperature of 1000°C for 15 hours again, thus obtaining a metallic compound having a volume average particle size of 2 µm. The detection result shows that the chemical formula of the metallic compound is Cu_{1.5}Ba_{0.75}Sr_{0.75}(PO₄)₂. The metallic compound shows light green with a hexadecimal color code (i.e. HEX format) of #90EE90 and a RGB color model (i.e. RGB format) of 144, 238, 144.

### (2) Formation of polymer sheet

Polycarbonate, antioxidant 1098, PE wax as a lubricant and the metallic compound prepared in step (1) were mixed. With respect to 100 weight parts of the polycarbonate, the amount of the metallic compound was 30 weight parts, the amount of the antioxidant was 0.05 weight parts, and the amount of the lubricant was 0.04 weight parts. After the obtained mixture was pelleted, the pellets were fed into an injection molding machine to perform injection molding, thus obtaining a polymer sheet with a thickness of 2 mm.

### (3) Irradiation and chemical plating

The polymer sheet obtained in step (2) was put on the sample stage of the laser device, then the laser was focused, the movement of the laser beam or the sample stage was controlled by a computer program. The laser device was Hans YLP-20 type laser device. The laser parameters were as follows: the wavelength was 1064nm, the scanning speed was 1000mm/s, the step was 6µm, the delay time was 50µs, the frequency was 30kHz, the power was 4kW, and the filling gap was 20µm. After laser etching, a decontamination processing was performed for the plastic sample, and then the plastic sample was put in a plating solution to perform chemical plating, thus obtaining a plating layer with a thickness of 12 µm. The plating solution comprised 5g/L copper sulfate pentahydrate, 25g/L potassium sodium tartrate, 7g/L sodium hydroxide, 10g/L formaldehyde, and 0.1g/L stabilizer.

The test result shows that the plating speed is 9 µm/h and the adhesion of the plating layer is ISO Grade 1.

### Example 4

### (1) Preparation of metallic compound

CuO, calcium oxalate and NH₄H₂PO₄ were mixed uniformly, in which the molar ratio between the CuO, calcium oxalate and NH₄H₂PO₄ was 0.15:2.85:2. Then, wet grinding was performed for the obtained mixture on a grinding mill, in which the dispersing agent was anhydrous ethanol. With respect to 100 weight parts of the mixture, the amount of anhydrous ethanol was 150 weight parts. The grinding was performed at a rotating speed of 500 rpm for 5 hours.

The obtained powder was put in an oven, and the powder was dried in an air atmosphere at a temperature of 80°C for 12 hours.

The dried powder was put in the muffle furnace and sintered in an air atmosphere at a temperature of 900°C for 10 hours. Then, dry grinding was performed for the sinter. Then, the obtained powder was put in the muffle furnace and sintered in an air atmosphere at a temperature of 1000°C for 20 hours again, thus obtaining a metallic compound having a volume average particle size of 2 µm. The detection result shows that the chemical formula of the metallic compound is Cu_{0.15}Ca_{2.85}(PO₄)₂. The metallic compound shows light cyan with a hexadecimal color code (i.e. HEX format) of #E1FFFF and a RGB color model (i.e. RGB format) of 225, 255, 255. (2) Formation of polymer sheet

Polycarbonate, antioxidant 1098, PE wax as a lubricant and the metallic compound prepared in step (1) were mixed. With respect to 100 weight parts of the polycarbonate, the amount of the metallic compound was 40 weight parts, the amount of the antioxidant was 0.05 weight parts, and the amount of the lubricant was 0.04 weight parts. After the obtained mixture was pelleted, the pellets were fed into an injection molding machine to perform injection molding, thus obtaining a polymer sheet with a thickness of 2 mm.

### (3) Irradiation and chemical plating

The polymer sheet obtained in step (2) was put on the sample stage of the laser device, then the laser was focused, the movement of the laser beam or the sample stage was controlled by a computer program. The laser device was Hans YLP-20 type laser device. The laser parameters were as follows: the wavelength was 1064nm, the scanning speed was 1000mm/s, the step was 6µm, the delay time was 50µs, the frequency was 30kHz, the power was 4kW, and the filling gap was 20µm. After laser etching, a decontamination processing was performed for the plastic sample, and then the plastic sample was put in a plating solution to perform chemical plating, thus obtaining a plating layer with a thickness of 12 µm. The plating solution comprised 5g/L copper sulfate pentahydrate, 25g/L potassium sodium tartrate, 7g/L sodium hydroxide, 10g/L formaldehyde, and 0.1g/L stabilizer.

The test result shows that the plating speed is 5 µm/h and the adhesion of the plating layer is ISO Grade 1.

### Comparative Example 1

### (1) Preparation of metallic compound

Cu₂O, Cr₂O₃ and Al₂O₃ were mixed uniformly, in which the molar ratio between the Cu₂O, Cr₂O₃ and Al₂O₃ was 1:0.3:0.7. Then, wet grinding was performed for the obtained mixture on a grinding mill, in which the dispersing agent was water. With respect to 100 weight parts of the mixture, the amount of the water was 150 weight parts. The grinding was performed at a rotating speed of 500 rpm for 5 hours.

The obtained powder was put in an oven, and the powder was dried in an air atmosphere at a temperature of 100°C for 12 hours.

The dried powder was put in the muffle furnace and sintered in an air atmosphere at a temperature of 800°C for 2 hours. Then, dry grinding was performed for the sinter, thus obtaining a metallic compound having a volume average particle size of 2 µm. The detection result shows that the chemical formula of the metallic compound is Cu₂Cr_{0.6}Al_{1.4}O_{3.3}. The metallic compound shows light sky blue with a hexadecimal color code (i.e. HEX format) of #87CEFA and a RGB color model (i.e. RGB format) of 135, 206, 250.

### (2) Formation of polymer sheet

The polymer sheet was prepared using substantially the same method as step (2) of Example 1, except that the metallic compound was the metallic compound prepared in step (1) of Comparative Example 1.

### (3) Irradiation and chemical plating

The laser etching and the chemical plating were performed using substantially the same method as step (3) in Example 1, except that the polymer sheet was a polymer sheet prepared in step (2) of Comparative Example 1.

The test result shows that the plating speed is 5 µm/h, and the adhesion of the plating layer is ISO Grade 1.

### Comparative Example 2

### (1) Preparation of metallic compound

The metallic compound was prepared using substantially the same method as step (1) of Comparative Example 1, except that CuO was used instead of Cu₂O. The detection result shows that the chemical formula of the metallic compound was CuCrAlO₄; based on the total amount of the metallic compound, the content of the CuO was 0.008mol%; the color of the metallic compound was black with a hexadecimal color code of #000000 and a RGB color model of 0, 0, 0.

### (2) Formation of polymer sheet

The polymer sheet was prepared using substantially the same method as step (2) of Example 1, except that the metallic compound was a metallic compound prepared in step (1) of Comparative Example 2. The color of the polymer sheet was black with a hexadecimal color code of #000000 and a RGB color model of 0, 0, 0.

### (3) Irradiation and chemical plating

The surface of the polymer sheet was metalized using substantially the same method as step (3) of Example 1, except that the polymer sheet was the polymer sheet obtained in step (3) of Comparative Example 2.

The chemical plating was performed using substantially the same method as step (3) in Example 1.

The test result shows that the plating speed is 2 µm/h, and the adhesion of the plating layer is ISO Grade 4.

### Comparative Example 3

### (1) Preparation of metallic compound

The metallic compound was prepared using substantially the same method as step (1) of Comparative Example 1, except that the sintering was performed in an air atmosphere. The detection result shows that chemical formula of the metallic compound is CuCr_{0.3}Al_{0.7}O₄. The metallic compound shows black with a hexadecimal color code of #000000 and a RGB color model of 0, 0, 0.

### (2) Formation of polymer sheet

The polymer sheet was prepared using substantially the same method as step (2) of the Example 1, except that the metallic compound was the metallic compound prepared in step (1) of Comparative Example 3. The color of the polymer sheet was black with a hexadecimal color code of #000000 and a RGB color model of 0, 0, 0.

### (3) Irradiation and chemical plating

The surface of the polymer sheet was metalized using substantially the same method as step (3) of the Example 1, except that the polymer sheet was the polymer sheet obtained in step (2) of Comparative Example 3.

The chemical plating was performed using substantially the same method as step (3) in Example 1.

The test result shows that the plating speed is 2 µm/h, and the adhesion of the plating layer is ISO Grade 4.

By comparing Example 1 with Comparative Examples 1 to 3, it can be seen that the metallic compound in the polymer article can be prepared using the conventional raw materials in the conventional sintering condition, and the metallic compound is not only light-colored, but also has a higher activity of promoting chemical plating.

Examples 5 to 9 are used for describing the ink composition and the method for selectively metalizing an insulating substrate.

### Example 5

### (1) Preparation of metallic compound

The metallic compound was prepared using substantially the same method as step (1) of Example 1, except that the metallic compound was grinded into particles with a volume average particle size of 80 nm.

### (2) Formation of ink composition

100 g of the metallic compound prepared in step (1), 20 g of a binder (under the trade name of CAB381-0.5 commercially available from Eastman Company, US), 100 g of n-heptanol, 2 g of a dispersing agent (under the trade name of DISPERBYK-165 commercially available from BYK company, Germany), 0.2 g of a defoamer (under the trade name of BYK-051 commercially available from BYK company, Germany), 0.4 g of a leveling agent (under the trade name of BYK-333 commercially available from BYK company, Germany) and 0.5 g of hydrogenated castor oil (commercially available from Wuhan GPC-China Chemistry Co., Ltd., China) were mixed uniformly, thus obtaining an ink composition.

### (3) Formation of ink layer

The ink composition prepared in step (2) was applied on a surface of an Al₂O₃ ceramic substrate by ink jet printing, and then dried at a temperature of 110°C for 5 hours, thus forming an ink layer on the surface of the substrate.

### (4) Chemical plating

The substrate obtained in step (3) was put in a plating solution to perform chemical plating, thus obtaining a plating layer with a thickness of 2 µm. The plating solution comprised 5g/L copper sulfate pentahydrate, 25g/L potassium sodium tartrate, 7g/L sodium hydroxide, 10g/L formaldehyde, 0.1g/L stabilizer.

The test result shows that the plating speed is 8 µm/h and the adhesion of the plating layer is ISO Grade 1.

### Comparative Example 4

The ink composition was prepared and coated on the surface of the substrate and chemical plating was performed, using substantially the same method as Example 5, except that the metallic compound was prepared using substantially the same method as step (1) of Comparative Example 2.

As a result, a metal layer cannot be formed on the surface of the substrate.

### Example 7

### (1) Preparation of metallic compound

The metallic compound was prepared using substantially the same method as step (1) of Example 2, except that the sinter was grinded into particles with a volume average particle size of 100nm.

### (2) Formation of ink composition

100 g of the metallic compound prepared in step (1), 15 g of polyvinyl butyral (under the trade name of Mowital commercially available from Kuraray company, Japan) and 20 g of toluene were mixed uniformly, thus obtaining an ink composition.

### (3) Formation of ink layer

The ink composition prepared in step (2) was applied on a surface of a poly(ether ether ketone) (PEEK) substrate by ink jet printing, and dried at a temperature of 150°C for 4 hours, thus forming an ink layer with a thickness of 25 µm on the surface of the substrate.

### (4) Chemical plating

The substrate obtained in step (3) was put in a plating solution to perform chemical plating, thus obtaining a plating layer with a thickness of 4 µm. The plating solution comprised 5g/L copper sulfate pentahydrate, 25g/L potassium sodium tartrate, 7g/L sodium hydroxide, 10g/L formaldehyde, and 0.1g/L stabilizer.

The test result shows that the plating speed is 5 µm/h and the adhesion of the plating layer is ISO Grade 1.

### Example 8

### (1) Preparation of metallic compound

The metallic compound was prepared using substantially the same method as step (1) of Example 3, except that the sinter was grinded into particles with a volume average particle size of 40nm.

### (2) Formation of ink composition

100 g of the metallic compound prepared in step (1), 30 g of an EVA binder (commercially available from Eastman Company, US), 110 g of toluene, 3 g of a dispersing agent (under the trade name of ANTI-TERRA-U 80 commercially available from BYK company, Germany), 0.5 g of a defoamer (under the trade name of BYK-065 commercially available from BYK company, Germany), 0.5 g of a leveling agent (under the trade name of BYK-306 commercially available from BYK company, Germany) and 0.4 g of hydroxyethyl cellulose (commercially available from Luzhou North Dadong Chemical Co., Ltd., China) were mixed uniformly, thus obtaining an ink composition.

### (3) Formation of ink layer

The ink composition prepared in step (2) was applied on a surface of a polycarbonate substrate by ink jet printing, and dried at a temperature of 150°C for 4 hours, thus forming an ink layer with a thickness of 15 µm on the surface of the substrate.

### (4) Chemical plating

The substrate obtained in step (3) was put in a plating solution to perform chemical plating, thus obtaining a plating layer with a thickness of 3 µm. The plating solution comprised 5g/L copper sulfate pentahydrate, 25g/L potassium sodium tartrate, 7g/L sodium hydroxide, 10g/L formaldehyde, and 0.1g/L stabilizer.

The test result shows that the plating speed is 5 µm/h and the adhesion of the plating layer is ISO Grade 1.

### Example 9

The ink composition was prepared, and a plating layer was formed on the surface of the substrate, using substantially the same method as Example 8, except that before the substrate obtained in step (3) was put in the plating solution to perform chemical plating, the ink layer formed in step (3) was irradiated using laser, then the irradiated substrate was put in a plating solution to perform chemical plating. The conditions of the laser irradiation are as follows: the laser wavelength was 1064nm, the power was 5W, the frequency was 20kHz, the line scan speed was 800mm/s, and the filling gap was 20 µm.

The test result shows that the plating speed is 9 µm/h and the adhesion of the plating layer is ISO Grade 1.

The results of Examples 5, 7 and 8 indicate that the surface of the substrate having the ink layer formed by the ink composition according to embodiments of the present disclosure has a chemical plating activity, on which chemical plating can be directly performed. By comparing Example 9 with Example 8, it can be seen that before chemical plating is performed on the surface of the substrate having the ink layer formed by the ink composition according to embodiments of the present disclosure, the ink layer is irradiated using laser to gasify the surface of the ink layer, thus achieving a higher plating speed.

## Claims

1. A polymer article comprising a polymer matrix and a metallic compound dispersed in the polymer matrix, **characterized in that** the metallic compound is a compound represented by formula (I),
AₓCu_{y}(PO₄)₂ (I)
wherein in formula (I), A is at least one element selected from a group consisting of Ca, Mg, Ba, Sr, and a combination thereof, x/y=0.1 to 20, x+y=3.

2. The polymer article according to claim 1, wherein based on the total amount of the polymer article, the content of the metallic compound is 1 wt% to 40 wt%.

3. The polymer article according to claim 1, wherein the metallic compound is selected from a group consisting of Cu_{2.7}Mg_{0.3}(PO₄)₂, Cu_{1.5}Mg_{1.5}(PO₄)₂, Cu_{1.5}Ba_{0.75}Sr_{0.75}(PO₄)₂, Cu_{0.15}Mg_{2.85}(PO₄)₂, Cu₁₅Ca₁₅(PO₄)₂, Cu_{0.15}Ca_{2.85}(PO₄)₂, Cu₂Ba(PO₄)₂, CuSr₂(PO₄)₂, Cu_{0.4}Sr_{2.6}(PO₄)₂, or a combination thereof.

4. An ink composition containing at least one metallic compound and at least one binder, **characterized in that** the metallic compound is a compound represented by formula (I),
AₓCu_{y}(PO₄)₂ (I)
wherein in formula (I), A is at least one element selected from a group consisting of Ca, Mg, Ba, Sr, and a combination thereof, x/y=0.1 to 20, x+y=3.

5. The ink composition according to claim 4, wherein with respect to 100 weight parts of the metallic compound, the amount of the binder is 1 weight part to 60 weight parts.

6. The ink composition according to claim 4, wherein the metallic compound is selected form Cu_{2.7}Mg_{0.3}(PO₄)₂, Cu_{1.5}Mg_{1.5}(PO₄)₂, Cu_{1.5}Ba_{0.75}Sr_{0.75}(PO₄)₂, Cu_{0.15}Mg_{2.85}(PO₄)₂, Cu_{1.5}Ca_{1.5}(PO₄)₂, Cu_{0.15}Ca_{2.85}(PO₄)₂, Cu₂Ba(PO₄)₂, CuSr₂(PO₄)₂, Cu_{0.4}Sr_{2.6}(PO₄)₂, or a combination thereof.

7. A method for selectively metalizing a polymer article according to one of 1 through 3, comprising steps of:
irradiating a surface of the polymer article to be metalized with energy beam; and
performing chemical plating on the irradiated polymer article.

8. The method according to claim 7, wherein the energy beam is a laser.

9. The method according to claim 8, wherein the laser has a wavelength of 157nm to 10.6 µm, a scanning speed of 500 mm/s to 8000 mm/s, a step of 3µm to 9 µm, a delay time of 30 µs to 100 µs, a frequency of 30kHz to 40kHz, a power of 3kW to 4kW, and a filling gap of 10µm to 50 µm.

10. A method for selectively metalizing an insulating substrate, comprising steps of:
applying the ink composition according to one of claims 4 through 6 on a surface of the insulating substrate to be metalized to form an ink layer; and
performing chemical plating on the insulating substrate having the ink layer to plate at least one metal layer on the ink layer.

11. The method according to claim 10, further comprising:
irradiating a surface of the ink layer with energy beam, to gasify the surface of the ink layer.

12. The method according to claim 10, wherein the energy beam is a laser.

13. The method according to claim 12, wherein the laser has a wavelength of 157nm to 10.6µm, a scanning speed of 500 mm/s to 8000 mm/s, a step of 3 µm to 9 µm, a delay time of 30 µs to 100 µs, a frequency of 30kHz to 40kHz, a power of 3kW to 4kW, and a filling gap of 10µm to 50 µm.

## Patentansprüche

1. Einen Polymerartikel, aufweisend eine Polymermatrix und eine metallische Verbindung, die in der Polymermatrix dispergiert ist, **dadurch gekennzeichnet, dass** die metallische Verbindung eine Verbindung ist, die durch Formel (I) dargestellt ist:
AₓCu_{y}(PO₄)₂ (I),
wobei in Formel (I) A zumindest ein Element ausgewählt aus einer Gruppe bestehend aus Ca, Mg, Ba, Sr und einer Kombination derselben ist, wobei x/y=0,1 bis 20, x+y=3.

2. Der Polymerartikel nach Anspruch 1, wobei, bezogen auf die Gesamtmenge des Polymerartikels, der Gehalt der metallischen Verbindung 1 Gew.-% bis 40 Gew.-% beträgt.

3. Der Polymerartikel nach Anspruch 1, wobei die metallische Verbindung aus einer Gruppe bestehend aus Cu_{2,7}Mg_{0,3}(PO₄)₂, Cu_{1,5}Mg_{1,5}(PO₄)₂, Cu_{1,5}Ba_{0,75}Sr_{0,75}(PO₄)₂, Cu_{0,15}Mg_{2,85}(PO₄)₂, Cu_{1,5}Ca_{1,5}(PO₄)₂, Cu_{0,15}Ca_{2,85}(PO₄)₂, Cu₂Ba(PO₄)₂, CuSr₂(PO₄)₂, Cu_{0,4}Sr₂,₆(PO₄)₂ oder einer Kombination derselben ausgewählt ist.

4. Eine Tintenzusammensetzung, enthaltend zumindest eine metallische Verbindung und zumindest ein Bindemittel, **dadurch gekennzeichnet, dass** die metallische Verbindung eine Verbindung ist, die durch Formel (I) dargestellt ist:
AₓCu_{y}(PO₄)₂ (I)
wobei in Formel (I) A zumindest ein Element ausgewählt aus einer Gruppe bestehend aus Ca, Mg, Ba, Sr und einer Kombination derselben ist, wobei x/y=0,1 bis 20, x+y=3.

5. Die Tintenzusammensetzung nach Anspruch 4, wobei, bezogen auf 100 Gewichtsteile der metallischen Verbindung, die Menge des Bindemittels 1 Gewichtsteil bis 60 Gewichtsteile beträgt.

6. Die Tintenzusammensetzung nach Anspruch 4, wobei die metallische Verbindung aus Cu_{2,7}Mg_{0,3}(PO₄)₂, Cu_{1,5}Mg_{1,5}(PO₄)₂, Cu_{1,5}Ba_{0,75}Sr_{0,75}(PO₄)₂, Cu_{0,15}Mg_{2,85}(PO₄)₂, Cu_{1,5}Ca_{1,5}(PO₄)₂, Cu_{0,15}Ca_{2,85}(PO₄)₂, Cu₂Ba(PO₄)₂, CuSr₂(PO₄)₂, Cu_{0,4}Sr₂,₆(PO₄)₂ oder einer Kombination derselben ausgewählt ist.

7. Ein Verfahren zur selektiven Metallisierung eines Polymerartikels nach einem der Ansprüche 1 bis 3, aufweisend die folgenden Schritte:
Bestrahlen einer Oberfläche des zu metallisierenden Artikels mit einem Energiestrahl; und
Durchführen von chemischem Plattieren auf dem bestrahlen Polymerartikel.

8. Das Verfahren nach Anspruch 7, wobei der Energiestrahl ein Laser ist.

9. Das Verfahren nach Anspruch 8, wobei der Laser eine Wellenlänge von 157 nm bis 10,6 µm, eine Abtastgeschwindigkeit von 500 mm/s bis 8000 mm/s, einen Schritt von 3 µm bis 9 µm, eine Verzögerungszeit von 30 µs bis 100 µs, eine Frequenz von 30 kHz bis 40 KHz, eine Leistung von 3 kW bis 4 kW und einen Füllspalt von 10 µm bis 50 µm aufweist.

10. Ein Verfahren zur selektiven Metallisierung eines isolierenden Substrats, aufweisend die folgenden Schritte:
Aufbringen der Tintenzusammensetzung nach einem der Ansprüche 4 bis 6 auf einer Oberfläche des zu metallisierenden isolierenden Substrats, um eine Tintenschicht auszubilden; und
Durchführen von chemischem Plattieren auf dem isolierenden Substrat, das die Tintenschicht aufweist, um zumindest eine Metallschicht auf die Tintenschicht zu plattieren.

11. Das Verfahren nach Anspruch 10, ferner aufweisend:
Bestrahlen einer Oberfläche der Tintenschicht mit einem Energiestrahl, um die Oberfläche der Tintenschicht zu vergasen.

12. Das Verfahren nach Anspruch 10, wobei der Energiestrahl ein Laser ist.

13. Das Verfahren nach Anspruch 12, wobei der Laser eine Wellenlänge von 157 nm bis 10,6 µm, eine Abtastgeschwindigkeit von 500 mm/s bis 8000 mm/s, einen Schritt von 3 µm bis 9 µm, eine Verzögerungszeit von 30 µs bis 100 µs, eine Frequenz von 30 kHz bis 40 kHz, eine Leistung von 3 kW bis 4 kW und einen Füllspalt von 10 µm bis 50 µm aufweist.

## Revendications

1. Un article polymère, comprenant une matrice polymère et un composé métallique dispersé dans la matrice polymère, **caractérisé en ce que** le composé métallique est un composé représenté par la formule (I) :
AₓCu_{y}(PO₄)₂ (I),
dans la formule (I), A étant au moins un élément sélectionné dans un groupe constitué de Ca, Mg, Ba, Sr et n'importe quelle combinaison de ceux-ci, x/y=0,1 à 20, x+y=3.

2. L'article polymère selon la revendication 1, dans lequel le contenu du composé métallique est compris entre 1 % en poids et 40 % en poids, par rapport à la quantité totale de l'article polymère.

3. L'article polymère selon la revendication 1, dans lequel le composé métallique est sélectionné dans un groupe constitué par Cu_{2,7}Mg_{0,3}(PO₄)₂, Cu_{1,5}Mg_{1,5}(PO₄)₂, Cu_{1,5}Ba_{0,75}Sr_{0,75}(PO₄)₂, Cu_{0,15}Mg_{2,85}(PO₄)₂, Cu_{1,5}Ca_{1,5}(PO₄)₂, Cu_{0,15}Ca_{2,85}(PO₄)₂, Cu₂Ba(PO₄)₂, CuSr₂(PO₄)₂, Cu_{0,4}Sr₂,₆(PO₄)₂ ou n'importe quelle combinaison de ceux-ci.

4. Une composition d'encre, contenant au moins un composé métallique et au moins un liant, **caractérisé en ce que** le composé métallique est un composé représenté par la formule (I) :
AₓCu_{y}(PO₄)₂ (I),
dans la formule (I), A étant au moins un élément sélectionné dans un groupe constitué de Ca, Mg, Ba, Sr, et n'importe quelle combinaison de ceux-ci, x/y=0,1 à 20, x+y=3.

5. La composition d'encre selon la revendication 4, dans laquelle la quantité du liant est comprise entre 1 partie en poids et 60 parties en poids, par rapport à 100 parties en poids du composé métallique.

6. La composition d'encre selon la revendication 4, dans laquelle le composé métallique est sélectionné de Cu_{2,7}Mg_{0,3}(PO₄)₂, Cu_{1,5}Mg_{1,5}(PO₄)₂, Cu_{1,5}Ba_{0,75}Sr_{0,75}(PO₄)₂, Cu_{0,15}Mg_{2,85}(PO₄)₂, Cu_{1,5}Ca_{1,5}(PO₄)₂, Cu_{0,15}Ca_{2,85}(PO₄)₂, Cu₂Ba(PO₄)₂, CuSr₂(PO₄)₂, Cu_{0,4}Sr₂,₆(PO₄)₂ ou n'importe quelle combinaison de ceux-ci.

7. Un procédé de métallisation sélective d'un article polymère selon l'une des revendications 1 à 3, comprenant les étapes suivantes :
irradier une surface de l'article polymère destiné à être métallisé par un faisceau d'énergie ; et
effectuer un placage chimique sur l'article polymère irradié.

8. Le procédé selon la revendication 7, dans lequel le faisceau d'énergie est un laser.

9. Le procédé selon la revendication 8, dans lequel le laser a une longueur d'onde comprise entre 157 nm et 10,6 µm, une vitesse de balayage de 500 mm/s à 8000 mm/s, un pas de 3 µm à 9 µm, un temps de retard de 30 µs à 100 µs, une fréquence de 30 kHz à 40 kHz, une puissance de 3 kW à 4 kW, et un espace de remplissage de 10 µm à 50 µm.

10. Un procédé de métallisation sélective d'un substrat isolant, comprenant les étapes suivantes :
appliquer la composition d'encre selon l'une des revendications 4 à 6 sur une surface du substrat isolant destiné à être métallisé afin de former une couche d'encre ; et
effectuer un placage chimique sur le substrat isolant ayant la couche d'encre afin de réaliser un placage d'au moins une couche métallique sur la couche d'encre.

11. Le procédé selon la revendication 10, comprenant en outre :
irradier une surface de la couche d'encre par un faisceau d'énergie afin de gazéifier la surface de la couche d'encre.

12. Le procédé selon la revendication 10, dans lequel le faisceau d'énergie est un laser.

13. Le procédé selon la revendication 12, dans lequel le laser a une longueur d'onde comprise entre 157 nm et 10,6 µm, une vitesse de balayage de 500 mm/s à 8000 mm/s, un pas de 3 µm à 9 µm, un temps de retard de 30 µs à 100 µs, une fréquence de 30 kHz à 40 kHz, une puissance de 3 kW à 4 kW, et un espace de remplissage de 10 µm à 50 µm.
